# EUROPEAN PATENT SPECIFICATION

(11) **EP 4 463 951 B1**
(45) Date of publication and mention of the grant of the patent: **11.03.2026**
(21) Application number: 22839832.7
(22) Date of filing: 23.12.2022
(51) Int. Cl.: H04B 10/112, H04B 10/114, H04B 10/116

(54) **A TIME-ALIGNMENT SUBSYSTEM AND METHOD FOR USE WITH AN OPTICAL TRANSCEIVER**
ZEITAUSRICHTUNGSSUBSYSTEM UND VERFAHREN ZUR VERWENDUNG MIT EINEM OPTISCHEN SENDER-EMPFÄNGER
SOUS-SYSTÈME D'ALIGNEMENT TEMPOREL ET PROCÉDÉ DESTINÉ À ÊTRE UTILISÉ AVEC UN ÉMETTEUR-RÉCEPTEUR OPTIQUE

(30) Priority: 10.01.2022 EP 22150632
(43) Date of publication of application: 20.11.2024
(73) Proprietor: Signify Holding B.V., 5656 AE Eindhoven (NL)
(72) Inventor: ROJAS CALVENTE, Francisco, David, 5656 AE Eindhoven (NL)
(74) Representative: Verweij, Petronella Daniëlle
(86) International application number: PCT/EP2022/087711
(87) International publication number: WO 2023/131556

(56) References cited:
- WO-A1-2021/219435
- WO-A1-97/35387

## Description

### FIELD OF THE INVENTION

The invention relates to the field of optical wireless communication networks, such as Li-Fi networks. More particularly, various methods, apparatus, systems, and computer-readable media are disclosed herein related to a time-alignment subsystem and method for use with an optical transceiver with more than one optical front ends.

### BACKGROUND OF THE INVENTION

Recently, light fidelity (Li-Fi) is drawing more and more attention with its intrinsic security enhancement and capability to support higher data rates over the available bandwidth in visible light, Ultraviolet (UV), and Infrared (IR) spectra. Furthermore, Li-Fi is directional and shielded by light blocking materials, which provides it with the potential to deploy a larger number of access points by spatially reusing the same bandwidth. These key advantages over wireless radio frequency communication make Li-Fi a promising secure solution to mitigate the pressure on the crowded radio spectrum for IoT applications and indoor wireless access. For industrial applications, further benefits of Li-Fi may include guaranteed bandwidth for a certain user, and the ability to function robustly in areas otherwise susceptible to electromagnetic interference. Therefore, Li-Fi is a very promising technology to enable the next generation of immersive connectivity.

Given the line-of-sight requirement on optical wireless communication, in point-to-multi-point (P2MP) LiFi systems multiple Optical Front Ends (OFEs) may be connected, via multiple cables, to a single baseband module to achieve wide coverage at a reduced cost. However, the length of the cables that connect these OFEs to the baseband module need to be of the same length. Otherwise, destructive interference may occur when signals with different delays resulted from different cable lengths are summed at the baseband. The destructive interference will degrade the signal quality, or even cause the connection to drop completely.

WO2021219435A1 relates a LiFi system having multiple transceivers and a single multiple-input- multiple-output (MIMO) modem with at least M outputs, wherein the M transmit outputs of the MIMO modem are fed to a linear combiner.

WO9735387A1 relates to a method and apparatus for communicating from a base unit to a plurality of portable infrared devices using established communication protocols, where the signals are sent along cables from the base unit via stationary infrared receiver/transmitter modules at infrared carriers in standard transmission and receiving slots to and from the portable devices.

### SUMMARY OF THE INVENTION

For certain indoor applications, such as in office spaces, classrooms, conference halls, same information needs to be distributed to a big audience over a large area. Given the line-of-sight requirement of optical wireless communication, the coverage area of a single OFE is relatively limited, especially when there is also a requirement on the date rate to be supported. If an optical transceiver comprises a single OFE, optical access points (APs) need to be deployed in a high density to provide the full coverage. To reduce the cost of deploying such an OWC network, it is desirable to equip an optical transceiver with multiple OFEs, such that a baseband module of the optical transceiver is shared by the multiple OFEs. A plurality of cables is used to connect the multiple OFEs with the shared baseband module. If not all of the cables are of the same length, the signal paths over different cables may add different time delays or phase shifts to the signals. If there is an end point (EP) located in an overlapping area of the Field-of-Views (FoV) of different OFEs, when different copies of a same optical signal from the EP detected by the different OFEs are summed at the baseband module, those different copies will create destructive interference to each other. Similarly, the same problem will occur at the EP side for downlink communication, since the EP will receive different copies of a same signal originated from the shared baseband module. Therefore, it is beneficial to provide a solution to automatically calibrate or compensate such phase shifts, and hence the performance of the system will not be impacted by different lengths of the cables.

In view of the above, the present disclosure is directed to methods, apparatus, and systems for providing a solution to selectively adding different delays to different signal paths related to different cables to improve time-alignment among those signal paths. More particularly, the goal of this invention is achieved by a time-alignment subsystem as claimed in claim 1, by a time-alignment method as claimed in claim 12, and by an optical transceiver as claimed in claim 13.

In accordance with a first aspect of the invention a time-alignment subsystem is provided. A time-alignment subsystem for use with an optical transceiver that comprises a plurality of Optical Front Ends (OFEs) connected to a common baseband module via a plurality of cables, and the subsystem comprises: a controller; a plurality of signal detectors with each connected to an individual cable out of the plurality of cables and configured to: detect, on the individual cable, an individual copy of an incoming signal received by a corresponding OFE; and provide the controller with detection information; a delay network configured to selectively add an individual delay to an individual signal path of each individual cable to improve time-alignment among the plurality of signal paths; wherein the controller is configured to determine the individual delay for the individual signal path based on the detection information provided by each signal detector.

An OFE comprises at least a light source and a light sensor, which implement the conversion between electrical signals and optical signals. In a transmitter chain, the OFE is used to convert an electrical transmitting signal to an output optical signal via the light source. In a receiver chain, the OFE is used to convert a received optical signal to an output electrical signal via the light sensor for further signal processing. A light source can be a Light-emitting diode (LED), a Laser diode (LD), a Vertical Cavity Surface Emitting Laser (VCSEL), or an array of LED, LD, or VESEL. A light sensor can be a photodiode, an avalanche diode, or another type of light sensor. Sometimes a light sensor is also called as a photo detector, a light detector, or a photo sensor.

The plurality of OFEs are connected via a plurality of cables to the same baseband module of the optical transceiver. These cables may not be of the same length, which results in phase differences among the different copies of the signal received by the plurality of OFEs. The time-alignment subsystem is used to provide a convenient approach to measure and compensate such phase differences. When there is a signal sent by a device located in an overlapped area of coverage areas of more than one OFEs out of the plurality of OFEs, the corresponding signal detectors will detect different copies of the incoming signal on individual cables or signal paths connected to the more than one OFEs. The detection information will be provided to a controller. The controller measures and determines the difference in time of arrivals of the different copies received by the different OFEs. Based on this time difference, the controller decides to apply a correction to this difference in phase (or time of arrival/delay) among the different copies by selectively activating an individual delay element of a corresponding signal path. The adjustment is applied to individual signal paths via the delay network.

Beneficially, the delay network comprises, for each individual cable, one or more delay elements each corresponding to a different delay value to be selectively added to a corresponding signal path of each individual cable, and the delay network is configured to selectively switch on one delay element according to the individual delay determined by the controller.

In one example, each delay element is a lumped-element delay line implemented with LC components.

The lumped-element delay lines may comprise a number of inductors and capacitors with similar parameters. The inductors are typically connected in series and the capacitors are connected through the junction between inductors to the ground. Lumped parameter delay lines may be tapped at several points to give a series of delay values.

In another example, each delay element is a printed circuit board trace with a layout that introduces a different delay value.

In this example, the delay value may be determined by the layout of a delay element, which may be characterized by a certain shape, pattern, size, or a combination of those.

Advantageously, each signal detector out of the plurality of signal detectors is a Radio Frequency, RF, power detector.

RF power detectors, or RF detectors, are devices used to detect the presence of RF waves. In one example, an RF detector monitors or samples the output of an RF circuit and develops a DC output voltage proportional to the RF power at that point.

In a preferred implementation, the controller is a microcontroller with an integrated analog to digital converter, ADC.

With the analog samples obtained from the signal detector, it is beneficial that the microcontroller comprises an integrated ADC. And then quantized signals are used for further processing.

Beneficially, each signal detector out of the plurality of signal detectors comprises a comparator.

A signal detector may be capable to compare two analog signal inputs, or one analog input signal against a threshold value, and then generate a digital output representing the result of the comparison.

In another preferred implementation, the controller is a programmable logic device.

When the result obtained from the signal detector is a digital signal, the controller may be a programmable logic device, which can be either a field-programmable gate array (FPGA) or a complex programmable logic device (CPLD).

Preferably, the controller is further configured to determine individual delays by measuring differences among time of arrival of different individual copies of the incoming signal received by more than one OFEs out of the plurality of OFEs.

Advantageously, the controller is further configured to determine individual delays to reduce the differences among time of arrival of different individual copies of the incoming signal.

The controller derives individual delays for different signal paths to compensate the difference in arrival time. For example, the controller may decide to assign a largest delay value to an individual signal path corresponding to the OFE that first detects the incoming signal. The controller may decide to assign a shortest delay value or no delay to another individual signal path corresponding to the OFE that last detects the incoming signal. The goal is to make signal copies from different paths arrive at the baseband substantially synchronized after being compensated with individual delay values.

In a preferred example, the controller is further configured to approximate a determined individual delay to one out of the different delay values available for each individual cable in the delay network.

The granularity of an actual delay to be compensated by the time-alignment subsystem is related to the different delay values available in the delay network, such as determined by the delay elements of the delay network. Therefore, the controller may also be configured to make an approximation by mapping a determined individual delay to a delay value available in the delay network for certain individual cable.

In accordance with a second aspect of the invention a time-alignment method is provided. A time-alignment method carried out by a time-alignment subsystem for use with an optical transceiver that comprises a plurality of Optical Front Ends, OFEs, connected to a common baseband module via a plurality of cables, the method comprising the following steps of the time-alignment subsystem: detecting, on the individual cable, an individual copy of an incoming signal received by a corresponding OFE; determining an individual delay for an individual signal path of each individual cable based on the detection information; selectively adding the individual delay by a delay network to the individual signal path of each individual cable to improve time-alignment among the plurality of signal paths.

In accordance with a third aspect of the invention an optical transceiver is provided. An optical transceiver comprising: a baseband module; an analog front end (AFE) module connected to the baseband module; a summing amplifier connected to the AFE module; a plurality of optical front ends (OFEs) connected to the summing amplifier via a plurality of cables; and a time-alignment subsystem, according to the present invention, coupled between the summing amplifier and the plurality of cables.

Preferably, the optical transceiver is comprised in an optical wireless communication access point.

An optical wireless communication (OWC) access point, such as a Li-Fi access point, provides electronic devices or end devices within the corresponding optical cell access to an external network via an optical wireless link. The OWC access point can also support bi-directional optical links with more than one end device at the same time, forming a point-to-multi-point (P2MP) system.

### BRIEF DESCRIPTION OF THE DRAWINGS

In the drawings, like reference characters generally refer to the same parts throughout the different figures. Also, the drawings are not necessarily to scale, emphasis instead generally being placed upon illustrating the principles of the invention.
FIG. 1 demonstrates an optical wireless communication system according to the present invention;
FIG. 2 illustrates a basic block diagram of an optical transceiver;
FIG. 3 demonstrates an implementation of a time-alignment subsystem;
FIG. 4 illustrates a basic block diagram of a time-alignment subsystem; and
FIG. 5 shows a flow chart of a method of a time-alignment subsystem.

### DETAILED DESCRIPTION OF EMBODIMENTS

The embodiments set forth below represent information to enable those skilled in the art to practice the embodiments. Upon reading the following description in light of the accompanying drawings, those skilled in the art will understand the concepts of the disclosure and will recognize applications of these concepts not particularly addressed herein. It should be understood that these concepts and applications fall within the scope of the disclosure.

This invention is related to an optical wireless communication (OWC) system operating at an optical band, such as in visible light, Ultraviolet (UV), and Infrared (IR) spectra, where a high-speed communication link can be established between two remote devices with a direct and unobstructed path, or a Line-of-Sight path.

To address a large coverage area, such as office spaces, classrooms, conference halls, a wide angle LiFi point-to-multi-point (P2MP) system is usually achieved in a cost-effective manner by deploying multiple optical front ends (OFEs) connected to a single analog frontend (AFE) and baseband module in an optical access point (AP). In such a system, long cables are needed to connect the more than one OFEs to the shared AFE and baseband module. The lengths of these cables may be in the order of 1 to 10m, depending on the actual area to be covered. A signal path over such a long cable will add a cable-length dependent phase shift to the signals. Problems may occur if not all of the cables are of the same length. For example, if there is an end point (EP) located in an overlapping area of the Field-of-Views (FoV) or coverage area of different OFEs, when different copies of a same optical signal from the EP detected by the different OFEs are summed at the baseband module, those different copies will create destructive interference to each other due to the cable-length dependent phase shifts. Similarly, the same problem will occur at the EP side for downlink communication, since the EP will receive different copies of a same signal originated from the shared baseband module. Such destructive interference may cause severe throughput degradation and eventually disconnection.

On the other hand, to guarantee that all the cables are of the same length may not be easy to fulfill in practice, since such additional limitations will lead to considerable installation and maintenance efforts. In view of this, this invention discloses a time-alignment subsystem, which can be used to measure and adjust the delays or phase shifts resulted from different cable lengths, such that destructive interference as aforementioned can be reduced.

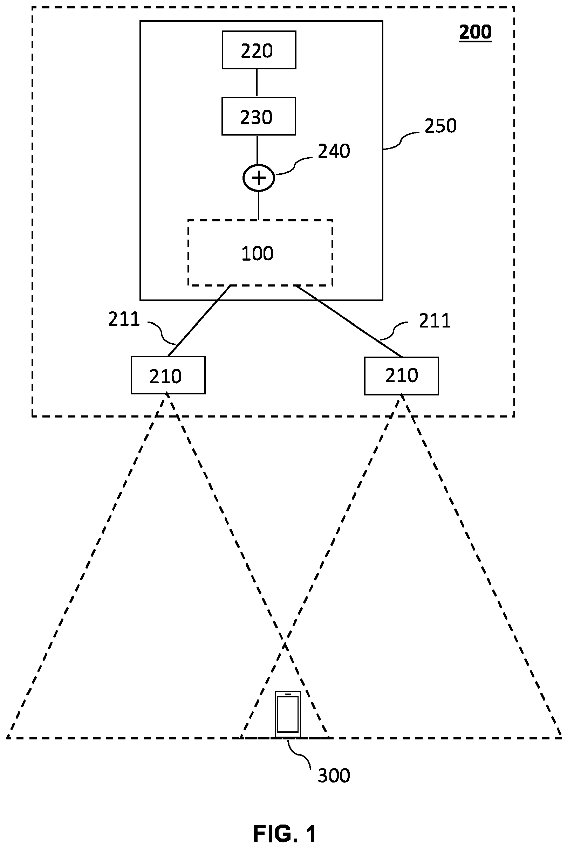

FIG. 1 demonstrates an optical wireless communication (OWC) system according to the present invention. In this example system setup, an optical transceiver 200 comprises a central module 250 connected to a plurality of Optical Front Ends, OFEs 210, via a plurality of cables 211. Same as a conventional system, the central module 250 comprises a common baseband module 220, an analog front end, AFE, module 230, and a summing amplifier 240. The central module 250 further comprises a time-alignment subsystem 100, which is placed between the transceiver lines and the summing amplifier 240. The time-alignment subsystem 100 may carry out an initial or periodic measurements of the phase difference between different copies of an incoming signal received by different OFEs 210. After the measurement, the phase difference between signals is compensated by selectively adding a delay to an individual signal path, when necessary, before reaching the summing amplifier.

The central module 250 may be placed in a single housing. The optical transceiver 200 may be deployed on the ceiling and operate as an access point (AP) 250 providing connectivity to an end point (EP) 300 in the area covered by the plurality of OFEs 210. The EP may be a mobile electronic device with optical wireless communication capability.

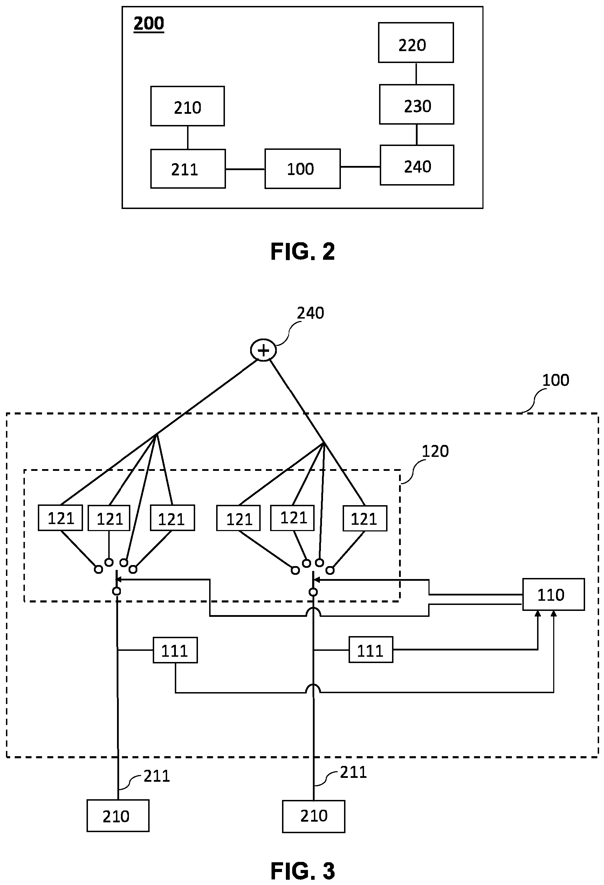

A basic block diagram of an optical transceiver 200 is illustrated in FIG. 2. The optical transceiver 200 comprises a common baseband module 220, an analog front end, AFE, module 230, a summing amplifier 240, a time-alignment subsystem 100, a plurality of cables 211, and a plurality of OFEs 210.

FIG. 3 demonstrates one possible implementation of a time-alignment subsystem 100. In this exemplary drawing, two OFEs 210 are shown as an example, while in a real system more OFEs 210 may be deployed to expand the coverage area of a single OWC transceiver. For example, eight or more OFEs are commonly used in commercial products. When there is an EP located in an overlapped area of the FoVs of more than one OFEs 210, a test frame, a data packet, or another signal from the EP will be received by the more than one OFEs 210. The signal detectors 111 will detect different copies of the incoming signal on individual cables or signal paths connected to the more than one OFEs 210. The detection information will be provided to a controller 110, which may be a CPU, a programmable logic, or a micro-processor. The controller 110 measures and determines the difference in time of arrivals of the different copies received by the different OFEs 210.

Based on this time difference, the controller 110 decides to apply a correction to this difference in phase (or time of arrival/delay) among the different copies by selectively activating an individual delay element of a corresponding signal path. The signal copy from an OFE 210 with the longest cable may be detected the latest, and therefore a direct path may be selected without adding any additional delay. For the other signal paths, a corresponding switch may be controlled to select a corresponding delay element, which is inversely correlated to the delay in time of arrival (therefore also inversely proportional to a corresponding cable length). After the delay compensation, different copies of a same incoming signal will arrive at the summing amplifier substantially synchronized in phase, such as within a certain tolerance range. The number of delay elements 121 to be incorporated in the delay network 120 may depend on the possible length variation of the cables, a granularity requirement on the phase tuning of the system, and/or the tolerance of the system to phase variations.

The delay network may be implemented with different topologies. In FIG. 3, parallel delay lines or delay elements are illustrated, with each branch related to an individual delay value to be selected. Alternatively, different delay values may also be realized in a cascaded manner.

In one implementation, a signal detector 111 may be an RF power detector, and the controller 110 may be a low-cost CPU (e.g., a microcontroller) with integrated one or more ADCs. The one or more ADCs comprised in the CPU will quantize the detected copies obtained from the signal detectors. The signal strength level of each individual copy will be monitored. The time moment that a certain threshold is reached provides an indication that a frame or a packet arrives, which is the time of arrival of a certain copy. The differences among the time of arrival of different copies are then measured, and used to control the delay network.

In another implementation, to allow for faster and more precise time measurement, although with the penalty of less noise immunity, the signal detectors may comprise a comparator (with or without an added amplifier) and the controller 110 a programmable logic device (e.g., FPGA or CPLD).

The delay networks can be implemented as lumped elements delay lines using LC components, or as a low-cost alternative by using long PCB traces in different patterns to minimize PCB size.

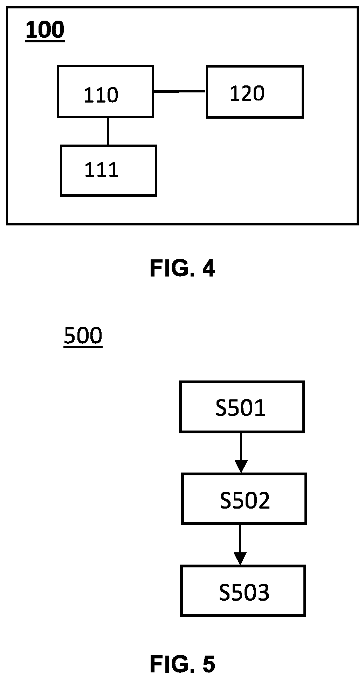

FIG. 4 schematically demonstrates the basic components of a time-alignment subsystem 100. The time-alignment subsystem 100 comprises a controller 110, a plurality of signal detectors 111, and a delay network 120. The plurality of signal detectors 111 are configured to detect signal copies on individual cables, and to provide the detection information to the controller. Based on the detection information provided by each signal detector 111, the controller 110 is configured to determine an individual delay for the individual signal path. The delay network 120 is configured to selectively add the individual delay, according to the instruction from the controller 110, to an individual signal path of each individual cable 211 to improve time-alignment among the plurality of signal paths.

FIG. 5 shows a flow chart of a time-alignment method 500 carried out by a time-alignment subsystem 100 for use with an optical transceiver 200 that comprises a plurality of Optical Front Ends, OFEs 210, connected to a common baseband module 220 via a plurality of cables 211. The method comprises the following steps of the time-alignment subsystem 100: detecting in step S501, on the individual cable 211, an individual copy of an incoming signal received by a corresponding OFE 210; determining, in step S502, an individual delay for an individual signal path of each individual cable 211 based on the detection information; and in step S503, selectively adding the individual delay to the individual signal path of each individual cable 211 to improve time-alignment among the plurality of signal paths.

## Claims

1. A time-alignment subsystem (100) for use with an optical transceiver (200) that comprises a plurality of Optical Front Ends, OFEs (210), connected to a common baseband module (220) via a plurality of cables (211), the time-alignment subsystem comprising:
- a controller (110); the time-alignment subsystem being **characterized in** comprising:
- a plurality of signal detectors (111) with each connected to an individual cable (211) out of the plurality of cables (211) and configured to:
∘ detect, on the individual cable (211), an individual copy of an incoming signal received by a corresponding OFE (210); and
∘ provide the controller (110) with detection information;
- a delay network (120) configured to selectively add an individual delay to an individual signal path of each individual cable (211) to improve time-alignment among the plurality of signal paths;
wherein the controller (110) is configured to determine the individual delay for the individual signal path based on the detection information provided by each signal detector (111).

2. The time-alignment subsystem (100) of claim 1, wherein the delay network (120) comprises, for each individual cable (211), one or more delay elements (121) each corresponding to a different delay value to be selectively added to a corresponding signal path of each individual cable (211), and the delay network (120) is configured to selectively switch on one delay element according to the individual delay determined by the controller (110).

3. The time-alignment subsystem (100) of claim 2, wherein each delay element (121) is a lumped-element delay line implemented with LC components.

4. The time-alignment subsystem (100) of claim 2, wherein each delay element (121) is a printed circuit board trace with a layout that introduces a different delay value.

5. The time-alignment subsystem (100) of any one of previous claims, wherein each signal detector (111) out of the plurality of signal detectors (111) is a Radio Frequency, RF, power detector.

6. The time-alignment subsystem (100) of claim 5, wherein the controller (110) is a microcontroller with an integrated analog to digital converter, ADC.

7. The time-alignment subsystem (100) of any one of previous claims 1-4, wherein each signal detector (111) out of the plurality of signal detectors (111) comprises a comparator.

8. The time-alignment subsystem (100) of claim 7, wherein the controller (110) is a programmable logic device.

9. The time-alignment subsystem (100) of any one of previous claims, wherein the controller (110) is further configured to determine individual delays by measuring differences among time of arrival of different individual copies of the incoming signal received by more than one OFEs (210) out of the plurality of OFEs (210).

10. The time-alignment subsystem (100) of claim 9, wherein the controller (110) is further configured to determine individual delays to reduce the differences among time of arrival of different individual copies of the incoming signal.

11. The time-alignment subsystem (100) of claims 9-10, wherein the controller (110) is further configured to approximate a determined individual delay to one out of the different delay values available for each individual cable (211) in the delay network (120).

12. A time-alignment method (500) carried out by a time-alignment subsystem (100) for use with an optical transceiver (200) that comprises a plurality of Optical Front Ends, OFEs (210), connected to a common baseband module (220) via a plurality of cables (211), the method comprising the following steps:
- detecting (S501), on the individual cable (211), an individual copy of an incoming signal received by a corresponding OFE (210);
- determining (S502) an individual delay for an individual signal path of each individual cable (211) based on the detection information;
- selectively adding (S503) the individual delay by a delay network (120) of the time-alignment subsystem (100) to the individual signal path of each individual cable (211) to improve time-alignment among the plurality of signal paths.

13. An optical transceiver (200) comprising:
- a baseband module (220);
- an analog front end, AFE, module (230) connected to the baseband module (220);
- a summing amplifier (240) connected to the AFE module (230);
- a plurality of optical front ends, OFEs (210), connected to the summing amplifier (240) via a plurality of cables (211); and
- a time-alignment subsystem (100) of claim 1 coupled between the summing amplifier (240) and the plurality of cables (211).

14. The optical transceiver (200) of claim 13, the optical transceiver (200) is comprised in an optical wireless communication access point.

## Patentansprüche

1. Zeitabgleich-Teilsystem (100) zur Verwendung mit einem optischen Transceiver (200), der eine Vielzahl von optischen Front-Ends, OFEs (210), umfasst, die mit einem gemeinsamen Basisbandmodul (220) über eine Vielzahl von Kabeln (211) verbunden sind, das Zeitabgleich-Teilsystem umfassend:
- eine Steuerung (110); wobei das Zeitabgleich-Teilsystem,
**dadurch gekennzeichnet ist, dass** es umfasst:
- eine Vielzahl von Signaldetektoren (111), die jeweils mit einem einzelnen Kabel (211) aus der Vielzahl von Kabeln (211) verbunden und konfiguriert sind zum:
∘ Erfassen, auf dem einzelnen Kabel (211), einer einzelnen Kopie eines eingehenden Signals, das durch ein entsprechendes OFE (210) empfangen wird; und
∘ Bereitstellen, an die Steuerung (110), von Erfassungsinformationen;
- ein Verzögerungsnetzwerk (120), das konfiguriert ist, um eine einzelne Verzögerung zu einem einzelnen Signalpfad jedes einzelnen Kabels (211) selektiv hinzuzufügen, um den Zeitabgleich unter der Vielzahl von Signalpfaden zu verbessern;
wobei die Steuerung (110) konfiguriert ist, um die einzelne Verzögerung für den einzelnen Signalpfad basierend auf den Erfassungsinformationen zu bestimmen, die durch jeden Signaldetektor (111) bereitgestellt werden.

2. Zeitabgleich-Teilsystem (100) nach Anspruch 1, wobei das Verzögerungsnetzwerk (120) für jedes einzelne Kabel (211) ein oder mehrere Verzögerungselemente (121) umfasst, die jeweils einem unterschiedlichen Verzögerungswert entsprechen, der zu einem entsprechenden Signalpfad jedes einzelnen Kabels (211) selektiv hinzugefügt werden soll, und das Verzögerungsnetzwerk (120) konfiguriert ist, um ein Verzögerungselement gemäß der einzelnen Verzögerung, die durch die Steuerung (110) bestimmt wird, selektiv einzuschalten.

3. Zeitabgleich-Teilsystem (100) nach Anspruch 2, wobei jedes Verzögerungselement (121) eine Verzögerungsleitung mit konzentrierten Elementen ist, die mit LC-Komponenten implementiert ist.

4. Zeitabgleich-Teilsystem (100) nach Anspruch 2, wobei jedes Verzögerungselement (121) eine Leiterbahn der Leiterplatte mit einem Layout ist, das einen unterschiedlichen Verzögerungswert einleitet.

5. Zeitabgleich-Teilsystem (100) nach einem der vorstehenden Ansprüche, wobei jeder Signaldetektor (111) aus der Vielzahl von Signaldetektoren (111) ein Hochfrequenz-Leistungsdetektor, HF-Leistungsdetektor, ist.

6. Zeitabgleich-Teilsystem (100) nach Anspruch 5, wobei die Steuerung (110) eine Mikro-Steuerung mit einem integrierten Analog-Digital-Wandler, ADC, ist.

7. Zeitabgleich-Teilsystem (100) nach einem der vorstehenden Ansprüche 1 bis 4, wobei jeder Signaldetektor (111) aus der Vielzahl von Signaldetektoren (111) einen Komparator umfasst.

8. Zeitabgleich-Teilsystem (100) nach Anspruch 7, wobei die Steuerung (110) eine programmierbare Logikvorrichtung ist.

9. Zeitabgleich-Teilsystem (100) nach einem der vorstehenden Ansprüche, wobei die Steuerung (110) ferner konfiguriert ist, um einzelne Verzögerungen durch Messen von Unterschieden unter Ankunftszeiten unterschiedlicher einzelner Kopien des eingehenden Signals zu bestimmen, die durch mehr als ein OFE (210) aus der Vielzahl von OFEs (210) empfangen werden.

10. Zeitabgleich-Teilsystem (100) nach Anspruch 9, wobei die Steuerung (110) ferner konfiguriert ist, um einzelne Verzögerungen zu bestimmen, um die Unterschiede unter Ankunftszeiten unterschiedlicher einzelner Kopien des eingehenden Signals zu reduzieren.

11. Zeitabgleich-Teilsystem (100) nach den Ansprüchen 9 bis 10, wobei die Steuerung (110) ferner konfiguriert ist, um eine bestimmte einzelne Verzögerung auf einen aus den unterschiedlichen Verzögerungswerten anzunähern, die für jedes einzelne Kabel (211) in dem Verzögerungsnetzwerk (120) verfügbar sind.

12. Zeitabgleichverfahren (500), das durch ein Zeitabgleich-Teilsystem (100) zur Verwendung mit einem optischen Transceiver (200) ausgeführt wird, der eine Vielzahl von optischen Front-Ends, OFEs (210), umfasst, die mit einem gemeinsamen Basisbandmodul (220) über eine Vielzahl von Kabeln (211) verbunden sind, das Verfahren umfassend die folgenden Schritte:
- Erfassen (S501), auf dem einzelnen Kabel (211), einer einzelnen Kopie eines eingehenden Signals, das durch ein entsprechendes OFE (210) empfangen wird;
- Bestimmen (S502) einer einzelnen Verzögerung für einen einzelnen Signalpfad jedes einzelnen Kabels (211) basierend auf den Erfassungsinformationen;
- selektives Hinzufügen (S503) der einzelnen Verzögerung durch ein Verzögerungsnetzwerk (120) des Zeitabgleich-Teilsystems (100) zu dem einzelnen Signalpfad jedes einzelnen Kabels (211), um den Zeitabgleich unter der Vielzahl von Signalpfaden zu verbessern.

13. Optischer Transceiver (200), umfassend:
- ein Basisbandmodul (220);
- ein analoges Frontend-Modul, AFE-Modul, (230), das mit dem Basisbandmodul (220) verbunden ist;
- einen Summierverstärker (240), der mit dem AFE-Modul (230) verbunden ist;
- eine Vielzahl von optischen Front-Ends, OFEs (210), die mit dem Summenverstärker (240) über eine Vielzahl von Kabeln (211) verbunden sind; und
- ein Zeitabgleich-Teilsystem (100) nach Anspruch 1, das zwischen dem Summierverstärker (240) und der Vielzahl von Kabeln (211) gekoppelt ist.

14. Optischer Transceiver (200) nach Anspruch 13, wobei der optische Transceiver (200) in einem optischen drahtlosen Kommunikations-Zugangspunkt enthalten ist.

## Revendications

1. Sous-système d'alignement temporel (100) destiné à être utilisé avec un émetteur-récepteur optique (200) qui comprend une pluralité d'extrémités frontales optiques, OFE (210), connectées à un module de bande de base commun (220) par l'intermédiaire d'une pluralité de câbles (211), le sous-système d'alignement temporel comprenant :
- un dispositif de commande (110) ; le sous-système d'alignement temporel étant **caractérisé en ce qu'il** comprend :
- une pluralité de détecteurs de signaux (111), chacun étant connecté à un câble (211) individuel parmi la pluralité de câbles (211) et configuré pour :
∘ détecter, sur le câble (211) individuel, une copie individuelle d'un signal entrant reçu par une OFE (210) correspondante ; et
∘ fournir au dispositif de commande (110) des informations de détection ;
- un réseau de retard (120) configuré pour ajouter sélectivement un retard individuel à un trajet de signal individuel de chaque câble (211) individuel pour améliorer l'alignement temporel parmi la pluralité de trajets de signal ;
dans lequel le dispositif de commande (110) est configuré pour déterminer le retard individuel pour le trajet de signal individuel en fonction des informations de détection fournies par chaque détecteur de signal (111).

2. Sous-système d'alignement temporel (100) selon la revendication 1, dans lequel le réseau de retard (120) comprend, pour chaque câble (211) individuel, un ou plusieurs éléments de retard (121) correspondant chacun à une valeur de retard différente à ajouter sélectivement à un trajet de signal correspondant de chaque câble (211) individuel, et le réseau de retard (120) est configuré pour allumer sélectivement un élément de retard selon le retard individuel déterminé par le dispositif de commande (110).

3. Sous-système d'alignement temporel (100) selon la revendication 2, dans lequel chaque élément de retard (121) est une ligne de retard à éléments localisés mise en œuvre avec des composants LC.

4. Sous-système d'alignement temporel (100) selon la revendication 2, dans lequel chaque élément de retard (121) est une trace de carte de circuit imprimé avec une disposition qui introduit une valeur de retard différente.

5. Sous-système d'alignement temporel (100) selon l'une quelconque des revendications précédentes, dans lequel chaque détecteur de signal (111) parmi la pluralité de détecteurs de signal (111) est un détecteur de puissance radiofréquence, RF.

6. Sous-système d'alignement temporel (100) selon la revendication 5, dans lequel le dispositif de commande (110) est un microdispositif de commande avec un convertisseur analogique-numérique, CAN, intégré.

7. Sous-système d'alignement temporel (100) selon l'une quelconque des revendications précédentes 1 à 4, dans lequel chaque détecteur de signal (111) parmi la pluralité de détecteurs de signal (111) comprend un comparateur.

8. Sous-système d'alignement temporel (100) selon la revendication 7, dans lequel le dispositif de commande (110) est un dispositif logique programmable.

9. Sous-système d'alignement temporel (100) selon l'une quelconque des revendications précédentes, dans lequel le dispositif de commande (110) est en outre configuré pour déterminer des retards individuels en mesurant des différences entre les temps d'arrivée de différentes copies individuelles du signal entrant reçu par plus d'une OFE (210) parmi la pluralité d'OFE (210).

10. Sous-système d'alignement temporel (100) selon la revendication 9, dans lequel le dispositif de commande (110) est en outre configuré pour déterminer des retards individuels pour réduire les différences entre le temps d'arrivée de différentes copies individuelles du signal entrant.

11. Sous-système d'alignement temporel (100) selon les revendications 9 à 10, dans lequel le dispositif de commande (110) est en outre configuré pour approximer un retard individuel déterminé à une parmi les différentes valeurs de retard disponibles pour chaque câble (211) individuel dans le réseau de retard (120).

12. Procédé d'alignement temporel (500) mis en œuvre par un sous-système d'alignement temporel (100) destiné à être utilisé avec un émetteur-récepteur optique (200) qui comprend une pluralité d'extrémités frontales optiques,
OFE (210), connectées à un module de bande de base commun (220) par l'intermédiaire d'une pluralité de câbles (211), le procédé comprenant les étapes suivantes :
- détecter (S501), sur le câble (211) individuel, une copie individuelle d'un signal entrant reçu par une OFE (210) correspondante ;
- déterminer (S502) un retard individuel pour un trajet de signal individuel de chaque câble (211) individuel en fonction des informations de détection ;
- ajouter sélectivement (S503) le retard individuel par un réseau de retard (120) du sous-système d'alignement temporel (100) au trajet de signal individuel de chaque câble (211) individuel pour améliorer l'alignement temporel parmi la pluralité de trajets de signal.

13. Émetteur-récepteur optique (200) comprenant :
- un module de bande de base (220) ;
- un module d'extrémité frontale analogique, AFE, (230) connecté au module de bande de base (220) ;
- un amplificateur de sommation (240) connecté au module AFE (230) ;
- une pluralité d'extrémités frontales optiques, OFE (210), connectées à l'amplificateur de sommation (240) par l'intermédiaire d'une pluralité de câbles (211) ; et
- un sous-système d'alignement temporel (100) selon la revendication 1 couplé entre l'amplificateur de sommation (240) et la pluralité de câbles (211).

14. Émetteur-récepteur optique (200) selon la revendication 13, l'émetteur-récepteur optique (200) est compris dans un point d'accès de communication sans fil optique.
